# EUROPEAN PATENT SPECIFICATION

(11) **EP 0 555 615 B1**
(45) Date of publication and mention of the grant of the patent: **12.08.1998**
(21) Application number: 92830064.9
(22) Date of filing: 14.02.1992
(51) Int. Cl.: F16K 11/074

(54) **Water mixing cartridge for single control handle faucets**
Mischpatrone für eine Ein-Hebel-Armatur
Cartouche mélangeur d'eau pour robinet à commande unique

(43) Date of publication of application: 18.08.1993
(73) Proprietor: Girardini, Giancarlo, I-28019 Suno (Novara) (IT)
(72) Inventor: Girardini, Giancarlo, I-28019 Suno (Novara) (IT)
(74) Representative: Cicogna, Franco

(56) References cited:
- EP-A- 426 587
- GB-A- 2 108 634

## Description

### BACKGROUND OF THE INVENTION

The present invention relates to a water mixing cartridge for single control handle faucets, which cartridge comprises a restraining bottom element the size of which can be fitted to the thickness of the faucet components.

There are already known single control handle faucet assemblies, that is faucet assemblies in which the hot water and cold water are mixed by operating a single handle or lever to provide a single temperature adjusted water flow.

This single control handle faucets conventionally comprise a mixing cartridge which substantially includes a movable plate element provided for displacement with respect to a fixed plate.

As the movable plate is displaced, suitable ports are opened and closed, said ports being provided through the fixed plate and connected to the hot water and cold water inlet ducts.

The movable plate, in particular, is driven by a control lever or rod which is articulated on a tubular body so as to also partially swing or pivot.

In prior faucet cartridges of the above mentioned type, however, the box-like body holding the mentioned operating elements is closed, at the bottom thereof, by a further plate which is snap engaged on said body.

A drawback of the above disclosed faucet cartridge construction is that the fixed and movable plates can undesirably be affected by thickness variations which can originate an excessive clearance of the cartridge with a not perfect sealing thereof in the faucet body.

More specifically, as the thicknesses of the plates are less than a set thickness value, a not satisfactory sealing will be provided, whereas, with excessive thickness, the components of the cartridge will be subjected to great compression loads.

In the latter case, the cartridge will be subjected to operating drawbacks, because of a high friction between the movable plate and fixed plate, with a consequent possible jamming thereof.

In order to overcome the above mentioned drawbacks, the bottom portion of the cartridge has been provided with slots for receiving sealing elements having a comparatively great thickness in order to overcome possible size variations.

These sealing elements, however, in a case of a negative pressure in the duct, can be subjected to an undesirable suction effect, with a consequent disengaging from the seats thereof and with consequent water leakages.

In order to overcome this further drawback, plastic and/or metal insert elements have been arranged within the portions provided for the inlet of water.

This approach, on the other hand, has been found to be unsuitable, since the above mentioned insert elements did not provide a proper seat for the sealing elements and caused the sealing elements to be excessively hardened under compression loads.

The document EP-A- 426 587 discloses a water mixing cartridge according to the preamble of Claim 1.

### SUMMARY OF THE INVENTION

Accordingly the aim of the present invention is to overcome all of the above mentioned drawbacks, by providing a water mixing cartridge for single control handle faucets the bottom portion of which can be quickly and easily fitted to the overall thickness of the cartridge plates.

Within the scope of the above mentioned aim, a main object of the present invention is to provide such a water mixing cartridge for single control handle faucets which allow a perfect water sealing to be obtained under any operating conditions.

Yet another object of the present invention is to provide such a water mixing cartridge for single control handle faucets which is very simple in construction and very reliable in operation.

According to the present invention, the above mentioned aim and objects, as well as yet other object, which will become more apparent hereinafter, are achieved by a water mixing cartridge for single control handle according to claim 1.

### BRIEF DESCRIPTION OF THE DRAWINGS

Further characteristics and advantages of the water mixing cartridge for single control handle faucets according to the present invention will become more apparent from the following detailed disclosure of a preferred, though not exclusive, embodiment thereof, which is illustrated, by way of a merely indicative but not limitative example, in the figures of the accompanying drawings where:
Figure 1 is a vertical cross-sectional view of the cartridge according to the invention; and
Figure 2 is an exploded view illustrating the component elements forming the bottom of the water mixing cartridge according to the invention.

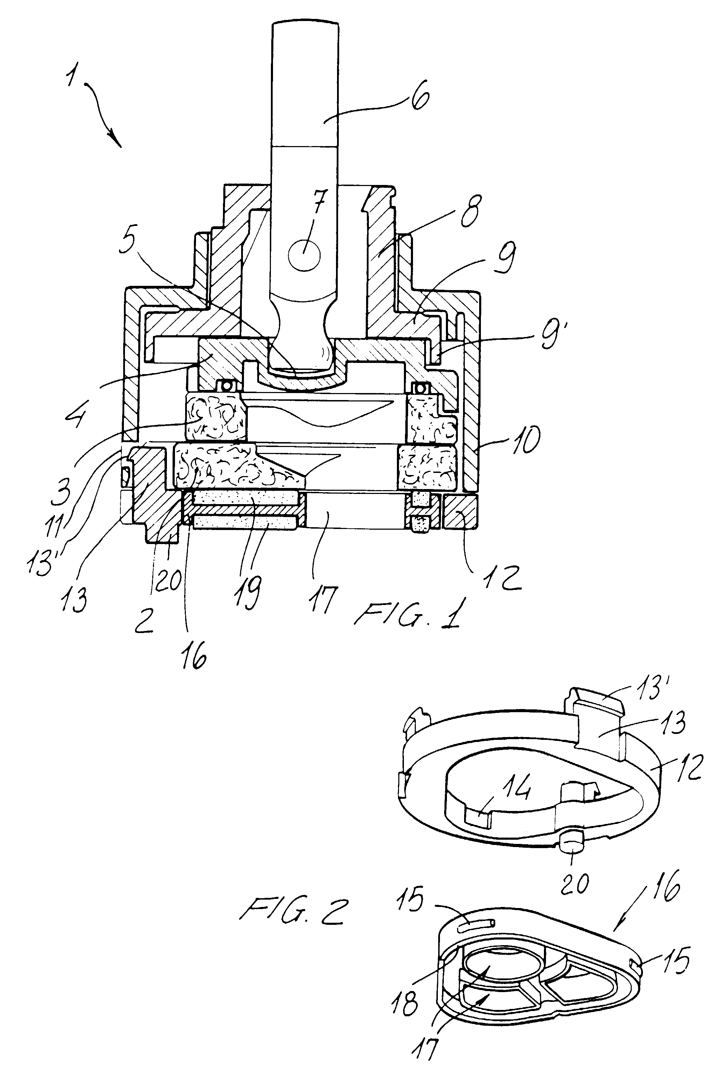

### DESCRIPTION OF THE PREFERRED EMBODIMENT

With reference to the figures of the accompanying drawings, the water mixing cartridge for single control handle faucets according to the present invention, which has been generally indicated at the reference number 1, comprises a fixed plate 2 therethrough there are formed several openings communicating with the hot water and cold water inlet ducts.

On the fixed plate there is arranged a movable plate 3 including a substantially elongated axial opening and being restrained to a plate cover element 4 including, at an offset position, a restraining seat 5.

In this seat there is engaged one end of a control rod 6 which is articulated, through a pivot pin 7, to a tubular structure 8 provided with a bottom flange 9 restraining, through an edge portion 9', the mentioned plate cover.

Between the movable plate 3 and said plate cover element there is moreover provided a sealing O-ring.

The above disclosed cooperating elements are held within a box-like body 10 which is provided, at the bottom thereof, with perimetrical openings or ports 11.

To said box-like body there is connected a frame 12, including corresponding upwardly directed lugs 13 and having a projecting ridge 13' adapted to be snap engaged within the mentioned perimetrical openings.

On this frame there are provided one or more pins for properly locating the cartridge.

On the inner side of the mentioned frame, moreover, there are defined further seats 14 therein there are engaged projection portions 15 provided along the perimetrical wall of a small frame element 16 adapted to slide along the inner opening of the mentioned frame.

Said frame element 16 is furthermore provided with further openings or ports 17 respectively for the inlet hot water and inlet cold water and the mixed outlet water.

Said element 16, moreover, can have any different desired thickness and is provided with perimetrical seats 18 for housing suitable perimetrical sealing elements 19.

Owing to the disclosed construction, it is possible to fit the cartridge to any possible thickness variations of the component elements of said cartridge.

In this connection it should be apparent that the frame 12 can be upwardly extended to be applied to an upward opened cartridge.

From the above disclosure and the observation of the figures of the accompanying drawings it should be apparent that the invention fully achieves the intended aim and objects.

While the invention has been disclosed and illustrated with reference to a preferred embodiment thereof, it should be apparent that the disclosed embodiments are susceptible to several modifications and variations, all of which come within the scope of the appended claims.

## Claims

1. A water mixing cartridge in the form of a box-like body (10) for single control handle faucets comprising a fixed plate (2), a movable plate (3) coupled to a plate cover (4), said plate cover (4) being connected to a lever element (6) in turn articulated on a pivot pin (7) connected to a tubular structure (8), said box-like body (10) holding the mentioned cooperating elements and being closed, at the bottom thereof, by a bottom plate (12, 16) including inlet ports (17) for hot water and cold water and at least one outlet port (17) for mixed water, characterized in that said bottom plate consists of a bottom plate frame (12) having a central opening and of a further frame element (16), said further frame element (16) being housed in said central opening and including said inlet ports and said at least one outlet port.

2. A water mixing cartridge according to Claim 1, characterized in that said box-like body (10) is provided with bottom perimetrical ports (11), said bottom plate frame (12) including a plurality of upwardly directed lugs (13) having a projecting ridge (13') provided for snap engaging in said perimetrical ports (11) of said box-like body, said bottom plate frame (12) further comprising at least one locating pin (20).

3. A water mixing cartridge according to Claims 1 and 2, characterized in that inside said bottom plate frame (12) are provided a plurality of seats (14) for housing corresponding projections (15) formed along a perimetrical wall of said frame element (16), said frame element (16) being moreover provided with perimetrical seats (18) for housing sealing elements (19).

## Patentansprüche

1. Ein Wassermischeinsatz in der Gestalt eines schachtelförmigen Körpers (10) für Wasserhähne mit einem einzigen Hebel, der eine befestigte Platte (2) und eine mit einem Plattenaufsatz (4) verbundene bewegliche Platte (3) umfaßt, wobei dieser Plattenaufsatz (4) mit einem Hebelteil (6) verbunden ist, das seinerseits mit einem Drehzapfen (7), der an einer röhrenförmigen Struktur (8) befestigt ist, gelenkig verbunden ist, wobei dieser schachtelförmige Körper (10) die erwähnten zusammenwirkenden Teile enthält und an seiner Unterseite von einer Bodenplatte (12, 16) verschlossen wird, die Einlässe (17) für heißes und kaltes Wasser und mindestens einen Auslaß (17) für gemischtes Wasser umfaßt, dadurch gekennzeichnet, daß diese Bodenplatte aus einem Bodenplattenrahmen (12) mit einer zentralen Öffnung und aus einem weiteren Rahmenteil (16) besteht, wobei sich dieses weitere Rahmenteil (16) in dieser zentralen Öffnung befindet und diese Einlässe und diesen mindestens einen Auslaß einschließt.

2. Ein Wassermischeinsatz nach Anspruch 1, dadurch gekennzeichnet, daß dieser schachtelförmige Körper (10) mit unteren Öffnungen (11) entlang dem Umfang ausgestattet ist, wobei dieser Bodenplattenrahmen (12) eine Vielzahl von nach oben gerichteten Ansätzen (13) mit einer hervorstehenden Kante (13') einschließt, die für die Schnappbefestigung in diese unteren Öffnungen (11) entlang dem Umfang dieses schachtelförmigen Körpers bereitgestellt sind, wobei dieser Bodenplattenrahmen (12) ferner mindestens einen Führungsstift (20) umfaßt.

3. Ein Wassermischeinsatz nach den Ansprüchen 1 und 2, dadurch gekennzeichnet, daß innerhalb dieses Bodenplattenrahmens (12) eine Vielzahl von Aufnahmen (14) für die Aufnahme entsprechender Auskragungen (15) bereitgestellt ist, die an einer Wand entlang dem Umfang dieses Rahmenteils (16) gebildet sind, wobei dieses Rahmenteil (16) ferner mit Aufnahmen (18) entlang seinem Umfang zur Aufnahme von Dichtungsteilen (19) ausgestattet ist.

## Revendications

1. Cartouche mélangeuse d'eau dont le corps (10) est en forme une boîte, pour robinet à commande unique comprenant une plaque fixe (2), une plaque amovible (3) reliées à un couvre-plaque (4), ledit couvre-plaque (4) étant raccordé à un élément à levier (6) articulé à son tour sur un pivot (7) raccordé à une structure tubulaire (8), ledit corps (10) qui a la forme d'une boîte, renfermant lesdits éléments qui coopèrent et étant fermé, dans sa partie inférieure, par une plaque inférieure (12, 16) comportant des orifices d'entrée (17) pour l'eau chaude et l'eau froide et au moins un orifice de sortie (17) pour l'eau mélangée, caractérisée en ce que ladite plaque inférieure consiste en un cadre de plaque inférieure ayant une ouverture centrale et en un élément de cadre supplémentaire (16), ledit élément de cadre supplémentaire (16) étant logé dans ladite ouverture centrale et comprenant lesdits orifices d'entrée et au moins un orifice de sortie.

2. Une cartouche mélangeuse d'eau selon la revendication 1, caractérisée en ce que ledit corps (10), qui a la forme d'une boîte, est pourvu d'orifices inférieurs périmétriques (11), ledit cadre de plaque inférieure (12) comprenant une pluralité d'ergots (13) dirigés vers le haut ayant une arête saillante (13') prévus pour permettre leur enclenchement dans lesdits orifices périmétriques (11) du corps qui a la forme d'une boite, ledit cadre de plaque inférieure (12) comprenant au moins une cheville de fixation (20).

3. Une cartouche mélangeuse d'eau selon les revendications 1 et 2, caractérisée en ce qu'une pluralité de sièges (14) est pourvue à l'intérieur dudit cadre de plaque inférieure (12) pour recevoir les projections correspondantes (15) formées le long d'une paroi périmétrique dudit élément de cadre (16), ledit élément de cadre (16) étant par ailleurs pourvu de sièges périmétriques (18) pour recevoir des éléments d'obturation (19).
